(19) Europäisches Patentamt / European Patent Office / Office européen des brevets

(11) **EP 4 231 516 B1**

(12) **EUROPEAN PATENT SPECIFICATION**

(45) Date of publication and mention
of the grant of the patent:
**02.04.2025  Bulletin 2025/14**

(21) Application number: **22158052.5**

(22) Date of filing: **22.02.2022**

(51) International Patent Classification (IPC):
$H02M\ 7/23$ (2006.01)    $H02P\ 29/50$ (2016.01)

(52) Cooperative Patent Classification (CPC):
**H02P 29/50; H02M 1/0043; H02M 1/15;
H02M 5/458; H02M 7/23**

(54) **DAMPING HIGHER ORDER HARMONICS IN AVERAGE DC LINK VOLTAGES**

DÄMPFUNG VON OBERSCHWINGUNGEN HÖHERER ORDNUNG IN DURCHSCHNITTLICHEN GLEICHSTROMVERBINDUNGSSPANNUNGEN

AMORTISSEMENT DES HARMONIQUES D'ORDRE SUPÉRIEUR DANS LES TENSIONS MOYENNES DES LIAISONS CC

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**23.08.2023  Bulletin 2023/34**

(73) Proprietor: **ABB SCHWEIZ AG
5400 Baden (CH)**

(72) Inventors:
• **TSOUMAS, Ioannis
8032 Zürich (CH)**
• **HARNEFORS, Lennart
72591 Västerås (SE)**

(74) Representative: **Sykora & König Patentanwälte PartG mbB
Maximilianstraße 2
80539 München (DE)**

(56) References cited:
EP-A1- 3 435 533    EP-A1- 3 514 944
EP-A1- 3 522 353    EP-A2- 2 698 894
WO-A1-2016/037623

## EP 4 231 516 B1

**Description**

FIELD OF THE INVENTION

The invention relates to a method, computer program, computer-readable medium and controller for controlling a converter system. The invention furthermore relates to the converter system and in particular to a converter system of a wind energy conversion system.

BACKGROUND OF THE INVENTION

In gearless wind energy conversion systems with a permanent magnet synchronous generator, the back electromotive force (BEMF) harmonics of the generator may cause low frequency oscillation of the DC link voltage. This oscillation is transferred to the transformer primary, where it appears as voltage and current interharmonics or even harmonics depending on the generator fundamental frequency. Since the related grid standards are very stringent on the maximum acceptable values of interharmonics and even harmonics, the respective limits may be violated for high values of the modulation index.

Furthermore, the grid-side harmonics may coincide with resonance frequencies of the grid impedance and may cause stability issues. Adding a passive filter to damp the resonance would increase the wind park cost.

In general, when possible, it is desirable to damp oscillations by control of a converter system, such that passive filters, which are expensive and bulky components, can be omitted. Additionally, further losses may be generated by passive filters.

EP 2 698 894 A2 relates to an energy power converter system for a wind turbine with a plurality of parallel converters, which are all coupled via a transformer to an electrical grid.

DESCRIPTION OF THE INVENTION

It is an objective of the invention to provide a control method for damping oscillations in paralleled converter branches. It is a further objective to provide an economic converter system for converting voltages from a generator, which observes grid standards of a grid, which is supplied by the converter system.

These objectives are achieved by the subject-matter of the independent claims. Further exemplary embodiments are evident from the dependent claims and the following description.

A first aspect of the invention relates to a method for controlling a converter system. The converter system may be adapted for converting an AC current from a generator, such as a wind turbine generator, into an AC current to be supplied to an electrical grid, which may be a large scale grid. In general, the converter system may be adapted for interconnecting a rotating electrical machine, which also may include a motor, with the electrical grid. The converter system may be a medium voltage system, adapted for converting voltages and currents of more than 1000 V and/or more than 100 A.

The converter system comprises at least two branches, wherein each branch comprises an AC-to-DC converter and a DC link cascade connected with each other. Each of these branches may be an AC-to-AC conversion branch comprising the AC-to-DC converter, the DC link and a DC-to-AC converter cascade connected with each other. AC means alternating current, DC means direct current.

Each branch may be associated with a stator winding system of the rotating electrical machine. The rotating electrical machine may comprise at least two stator winding systems. On a side of the electrical machine (which may be seen as machine side, motor side or generator side), each branch and in particular each AC-to-DC converter is connected with one of the stator winding systems.

The AC-side currents of the AC-to-DC converter may be phase-shifted with respect to each other. This may be due to the stator winding system configuration of the rotating electrical machine.

On the other side (which may be seen as grid-side), the branches may be coupled via a common transformer. Each branch and in particular each DC-to-AC converter may be connected to a transformer winding system of the common transformer.

It has to be understood that the converter system may be a three-phase system. Each of the stator winding systems and the transformer winding systems may comprise three windings. Furthermore, each of the currents and voltages described in the following may have three phases.

In general, the method may be performed automatically by a controller of the converter system. The method comprises: determining at least two AC-side currents, each of which is input into one of the AC-to-DC converters; and determining from the AC-side currents, a voltage reference for each of the AC-to-DC converters, such that the AC-side current follows a current reference for the respective AC-to-DC converter.

The AC-side currents may be stator currents from the rotating electrical machine. Analogously, the voltage references may be used for controlling the AC-side voltages, which may be stator voltages of the rotating electrical

2

machine. The AC-side currents may be measured at the AC-side of the AC-to-DC converters and/or may be estimated from other quantities measured in the converter system. The AC-side currents may be seen as winding currents. The AC-side currents may be current vectors. Each of the AC-side currents may have two components (such as alpha, beta). The two components may be obtained from two or more phase currents by an appropriate transformation.

The controller may have subcontrollers, which may be seen as current controllers, into which the AC-side currents are input and which determine the voltage references. Besides the AC currents, also current references and a torque reference may be input into the current controllers. Standard dq-frame current controllers may be used for this. In general, when there are N branches and/or N stator winding systems and/or N secondary transformer winding systems, there may be N current controllers.

The method further comprises: determining a DC link ripple indicator, which DC link ripple indicator is an average DC link voltage of the DC links, an average DC link current of the DC links and/or an average active power input into the at least two branches.

The DC link voltage of each DC link may be measured and/or estimated. Then, the average DC link voltage may be determined therefrom, wherein the average DC link voltage is the average of the DC link voltages of the DC links of the branches. Here and in the following, the average of several quantities may be the sum of these quantities optionally divided by the number of these quantities.

The DC link current of each DC link may be measured and/or estimated. Then, the average DC link current may be determined therefrom, wherein the average DC link current is the average of the DC link currents of the DC links of the branches.

Alternatively or additionally, the active power input into each branch and/or processed by each AC-to-DC converter may be estimated. This may be done based on the AC-side current and the AC-side voltage of the AC-to-DC converter, which may be measured and/or estimated, for example, at the converter terminals. It also is possible that the active power of an AC-to-DC converter is estimated by the product of the converter switching function with the AC-current. Then, the average active power may be determined therefrom, wherein the average active power is the average of the active powers of the AC-side currents.

All the afore mentioned quantities, the average DC link voltage, the average DC link current and the average active power are an indicator for a ripple in the average DC link voltage. In general, the DC link voltage should be constant. The DC link ripple may be the deviation from the constant DC link voltage reference.

The method further comprises: determining a converter reference correction from the DC link ripple indicator, such that a higher order harmonic in the average DC link voltage is damped. The DC link ripple is composed of several higher order harmonics, which may be determined relative to the fundamental frequency of the AC-to-DC converter. The fundamental frequency may be also a fundamental frequency of the rotating electrical machine, i.e. the speed of the rotor.

The average DC link ripple may be particularly relevant for grid-side harmonics, for example harmonics that are present on a grid-side and/or primary side of a transformer, to which the branches are coupled on a secondary side. With the method, a specific higher order harmonic in the average DC link voltage is damped. It may be that solely the average ripple is seen at the output and/or primary side of the transformer. In this case, the specific higher order harmonic is removed or damped in the output of the transformer.

The DC link ripple indicator may be filtered with respect to the higher order harmonic and/or may be phase-shifted to generate a reference signal adapted for damping the higher order harmonic in the AC-to-DC converter.

The controller of the converter system may comprise a subcontroller, which determines the converter reference correction. This subcontroller may be seen as a DC link ripple controller. The DC link ripple controller may be a resonant controller with a resonance frequency equal to the one of the DC link ripple indicator.

The method further comprises: determining corrected voltage references for the AC-to-DC converter by adding the converter reference correction to the voltage references of the AC-to-DC converters or by adding the converter reference correction to an average current reference for the AC-to-DC converters.

The converter reference correction may be either added to an average current reference, which is input into the current controllers as described above or it may be added to the voltage references output by the current controller. In both cases, corrected voltage references are fed to the converter modulator.

The method further comprises: controlling the AC-to-DC converters with the respective corrected voltage references. From the corrected voltage references, switching signals for each AC-to-DC converter may be determined and semiconductor switches of the AC-to-DC converter may be switched in accordance with the switching signals.

According to an embodiment of the invention, the converter reference correction is determined with respect to a rotating reference frame rotating with a fundamental frequency of the AC-side currents. It may be that the DC link ripple indicator is based on quantities, such as the average DC link voltage and the active power, which have been estimated in the rotating reference frame rotating with a fundamental frequency of the AC-side currents. Such a rotating reference frame may be the dq reference frame.

In this case, the converter reference correction may have to be transformed into a stationary reference frame of the respective AC-side current considering the phase-shift of the AC-side currents. Such a transformation may comprise a rotation matrix based on the fundamental frequency and the respective phase-shift.

According to an embodiment of the invention, the converter reference correction is determined from the DC link ripple indicator with a second order generalized integrator (SOGI) with a central frequency at the higher order harmonic. A second order generalized integrator may have the following transfer function

$$k_r \frac{s \cos(\varphi_c) - \omega_r \sin(\varphi_c)}{s^2 + (\omega_r)^2}$$

where $k_r$ is a gain factor, $\varphi_c$ is a compensation angle and $\omega_r$ is the resonance frequency of the second order generalized integrator, which in the present case is the frequency of the higher order harmonic.

According to an embodiment of the invention, the DC link ripple indicator is transformed into a rotating reference frame rotating with the frequency of the higher order harmonic. The second order generalized integrator can be implemented with complex valued quantities, when the corresponding quantities are processed in the rotating reference frame rotating with the frequency of the higher order harmonic.

Then, the converter reference correction may be determined from the DC link ripple indicator by multiplying a gain factor to the DC link ripple indicator, integrating it and adding a compensation angle to a phase of the output of the integrator.

After that, the converter reference correction may be transformed back into a rotating reference frame rotating with a fundamental frequency of the AC-side currents. In such a way, the converter reference correction can be further processed together with quantities that are in the rotating reference frame rotating with a fundamental frequency of the AC-side currents, such as the current references and/or the voltage references.

According to an embodiment of the invention, the higher order harmonic is the 6th order harmonic with respect to a fundamental frequency of the AC-side currents. Such harmonics may be problematic in the context of a wind turbine generator system with a permanent magnet synchronous machine. A back electromotive force induced in the stator winding systems due to the rotation of the permanent magnets placed in the rotor may generate a DC link ripple at 6 times the generator frequency, which in the case of a wind turbine may be about $6 \cdot 8\,Hz = 48\,Hz$. Considering the product of this harmonic with the grid-side converter fundamental component, a voltage harmonic component with a frequency of $50 + 48 = 98\,Hz$ may appear on the grid-side, which may be higher than the limit defined in relevant grid standards.

According to an embodiment of the invention, each voltage reference for an AC-to-DC converter is determined with a current controller for the respective AC-to-DC converter. When the number of AC-to-DC converters is N, then also the number of current controllers may be N.

According to an embodiment of the invention, the method further comprises: determining an average current, which is the average of the AC-side currents; and determining a differential current for each pair of branches, which differential current is the difference of the AC-side currents for the respective pair of branches. Before the average current and the differential currents are determined, a phase-shift of the AC-side currents may have to be compensated.

According to an embodiment of the invention, the method further comprises: determining an average voltage reference from the average current with an average current controller, such that the average current follows an average current reference; and determining a differential voltage reference for each differential current with a differential current controller, such that the differential current follows a differential current reference for the respective pair of branches.

For N branches (i.e. N stator winding systems, N AC-to-DC converters, N DC links, etc.), one average current and one average voltage reference as well as N-1 differential currents and N-1 differential current references are determined. The average voltage reference may be determined with an average current controller. Each differential current reference may be determined with a differential current controller. The average current controller and/or the differential current controllers may be standard dq-frame current controllers.

According to an embodiment of the invention, the method further comprises: determining the voltage reference for each branch from the average voltage reference and the differential voltage references. The AC-side currents have been transformed with a specific transformation into the average and differential currents. The voltage references for the AC-to-DC converters are determined with the inverse transformation, which is applied to the average voltage reference and the differential voltage references.

According to an embodiment of the invention, the converter reference correction is added to the average voltage reference. It is not necessary to correct the differential voltage references, since the corresponding voltages do not affect the average voltage of the coupled branches. Thus, it is possible to add the converter reference correction solely to the average voltage reference.

According to an embodiment of the invention, the converter reference correction is added to the average current reference. A further possibility is to already correct the average current reference, which is input into the average current controller. In this way, the average voltage reference is corrected indirectly, while the differential voltage references are not affected. Thus, it is possible to add the converter reference correction to the solely average current reference.

It has to be noted that the converter reference correction may have to be converted from a first system, in which it has been calculated (such as complex numbers) into a second system (such as a two-component vectors), in which the voltage references and/or current references, in particular the average voltage reference and/or the average current reference, are calculated.

According to an embodiment of the invention, the AC-side currents are transformed in a rotating reference frame, which rotates with a fundamental frequency of the AC-side currents and which eliminates a phase-shift of the AC-side current, before the voltage references are determined. In this reference frame the considered machine inductances have a constant value, even for electrical machines with saliency (e.g. permanent magnet generators). Furthermore, the current controllers also may be implemented easily in this reference frame.

According to an embodiment of the invention, the voltage references are transformed back to a stationary reference frame of the respective AC-side current considering the phase-shift of the AC-side current introduced by the geometrical displacement angle of the different winding systems and/or by the windings connection. After the voltage references have been determined by the current controllers and have been corrected with the help of the DC link ripple controller, the voltage references can be transformed back into a reference frame, in which the switching signals for the AC-to-DC converters can be determined.

According to an embodiment of the invention, the converter reference correction is added to the voltage references, before the voltage references are transformed back to a stationary reference frame of the respective AC-side current considering the phase-shift of the AC-side current. The converter reference correction may be determined in the same rotating reference frame as the voltage references and in particular the average voltage reference.

A further aspect of the invention relates to a computer program, which, when being executed on at least one processor of a converter system, is adapted for performing the method of one of the previous claims. A control system of the converter system may comprise one or more processors, which perform the method.

A further aspect of the invention relates to a computer-readable medium in which such a computer program is stored. A computer-readable medium may be a hard disk, an USB (Universal Serial Bus) storage device, a RAM (Random Access Memory), a ROM (Read Only Memory), an EPROM (Erasable Programmable Read Only Memory) or a FLASH memory. A computer-readable medium may also be a data communication network, e.g. the Internet, which allows downloading a program code. In general, the computer-readable medium may be a non-transitory or transitory medium. For example, a memory of the controller or the control system may be such a computer-readable medium.

A further aspect of the invention relates to a controller for a converter system, which is adapted for performing the method as described above and below. It has to be noted that the controller also may be at least partially implemented in hardware, for example with an FPGA and/or a DSP.

As described above, the controller may comprise subcontrollers. In particular, the controller may comprise a DC link ripple controller for determining the converter reference correction and/or at least two current controllers for determining the voltage references.

A further aspect of the invention relates to a converter system, which is controlled as described above and below.

The converter system comprises at least two branches, each branch comprising an AC-to-DC converter and a DC link cascade connected with each other; and a controller adapted for performing the method as described above and below.

Each AC-to-DC converter may be composed of NPC (neutral point clamped) half-bridges, in particular 3LNPC (three-level neutral point clamped) half-bridges.

The DC links of the branches may be split DC links, i.e. they may comprise two series-connected capacitors providing a positive, negative and neutral point (NP) to be connected to the AC-to-DC converter.

According to an embodiment of the invention, the converter system further comprises a rotating electrical machine. The rotating electrical machine may comprise at least two stator winding systems, each of which is connected to one of the AC-to-DC converters. There may be a branch for each stator winding system.

According to an embodiment of the invention, the rotating electrical machine is a generator and/or motor. The rotating electrical machine is a permanent magnet synchronous machine. Each branch may be adapted for a power transfer from the rotating electrical machine to an electrical grid and vice versa.

According to an embodiment of the invention, the converter system further comprises a transformer with at least two secondary winding systems, each secondary winding system connected to an DC-to-AC converter cascade connected with a DC link of the branches.

The branches of the converter system may be coupled via the transformer.

The secondary winding systems may be differently designed to have a phase-shift with respect to each other, such as a star-connected secondary winding system and a delta-connected secondary winding system.

Each DC-to-AC converter may be composed of NPC (neutral point clamped) half-bridges, in particular 3LNPC (three-level neutral point clamped) half-bridges.

The transformer furthermore may comprise a primary winding system connected to an electrical grid.

It has to be understood that features of the method as described in the above and in the following may be features of the computer program, the computer-readable medium, the controller and the converter system as described in the above and in the following, and vice versa.

These and other aspects of the invention will be apparent from and elucidated with reference to the embodiments described hereinafter.

BRIEF DESCRIPTION OF THE DRAWINGS

The subject-matter of the invention will be explained in more detail in the following text with reference to exemplary embodiments which are illustrated in the attached drawings.

Fig. 1 schematically shows a converter system according to an embodiment of the invention.
Fig. 2 illustrates the definition of reference frames used in embodiments of the invention.
Fig. 3 schematically shows a converter used in embodiments of the invention.
Fig. 4 shows a block diagram of a controller according to an embodiment of the invention.
Fig. 5 shows a block diagram of a controller according to a further embodiment of the invention.
Fig. 6 shows a block diagram of an embodiment of a subcontroller of the controllers of Fig. 4 and 5.
Fig. 7 shows a block diagram of a further embodiment of the subcontroller of Fig. 6.

The reference symbols used in the drawings, and their meanings, are listed in summary form in the list of reference symbols. In principle, identical parts are provided with the same reference symbols in the figures.

DETAILED DESCRIPTION OF EXEMPLARY EMBODIMENTS

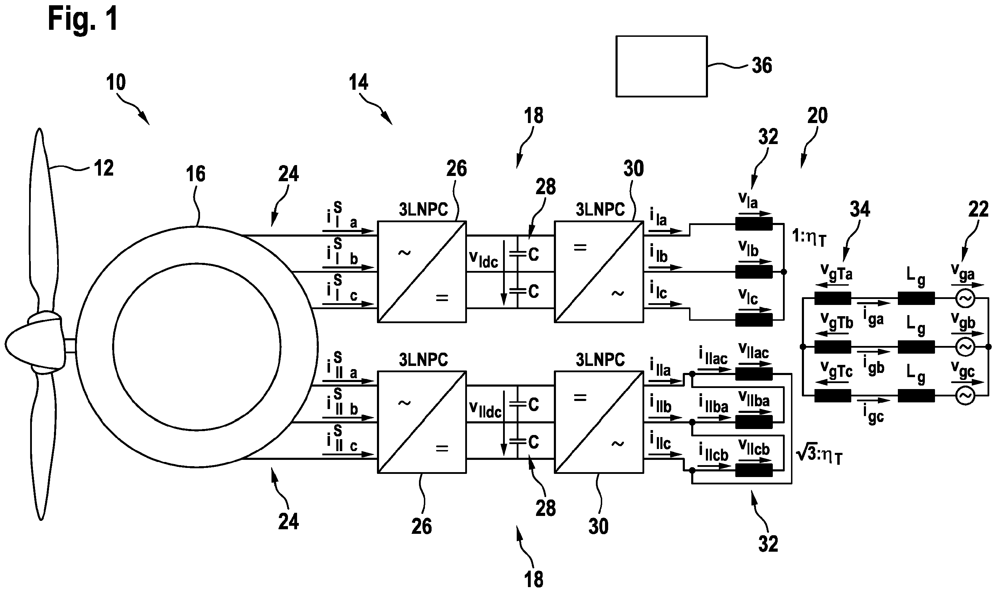

Fig. 1 shows a wind energy conversion system (WECS) 10 with a wind turbine 12 and a converter system 14. The converter system 14 comprises a generator 16, at least two conversion lines and/or AC-to-AC conversion branches 18, which interconnect the generator 16 with a transformer 20. The transformer 20 is connected to an electrical grid 22.

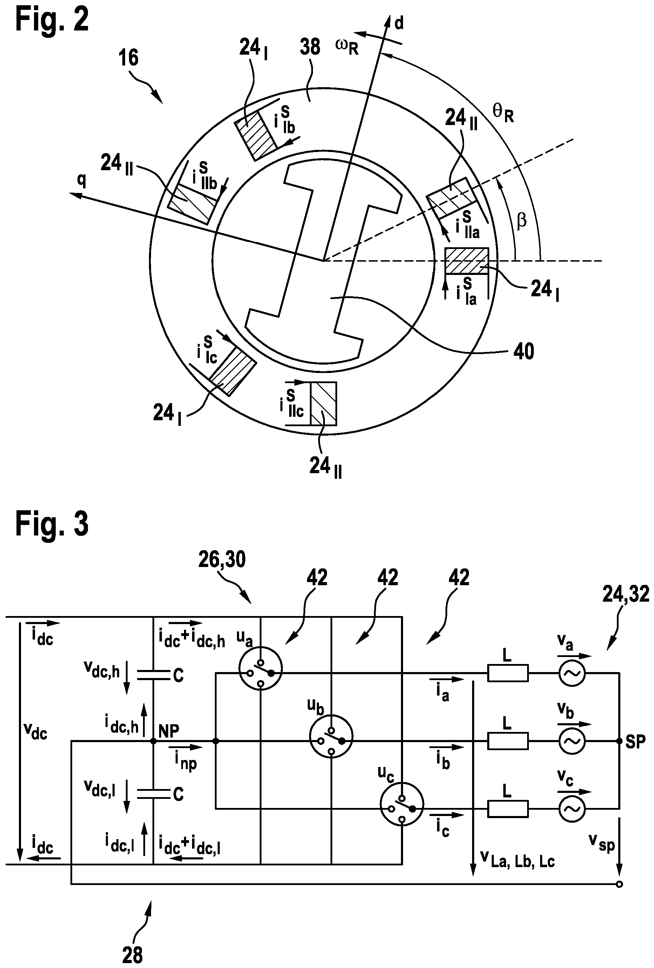

The generator 16 or more general rotating electrical machine 16 comprises at least two stator winding systems 24, which will be explained in more detail with respect to Fig. 2.

Each branch 18 is composed of a machine-side AC-to-DC converter 26, a DC link 28 and a grid-side DC-to-AC converter 30, which are cascade connected. The converters 26, 28 will be described in more detail with respect to Fig. 3. The machine-side AC-to-DC converters 26 may be modulated with either CB-PWM (Carrier-Based Pulse Width Modulation) or OPPs (Optimized Pulse Patterns). The grid-side DC-to-AC converters 30 may be modulated with OPPs.

Each of the converters 30 is connected to a secondary winding system 32 of the transformer 20, which may have a delta-wye configuration. The primary winding system 34 of the transformer 20, which is connected to the grid 22, may be in a wye configuration.

Fig. 1 also shows a controller 36 of the converter system 14, which is designed to control the branches 18 and in particular the converters 26, 30.

Fig. 2 shows the rotating electrical machine 16 in more detail. The rotating electrical machine 16 comprises a stator 38 with two or more stator winding systems $24, 24_\mathrm{I}, 24_\mathrm{II}$ and a rotor 40. In the case of the rotating electrical machine 16 being a permanent magnet synchronous generator, the rotor 40 may comprise permanent magnets. In another possible configuration the winding systems may be in the rotor and the permanent magnet in the stator.

In each stator winding system $24_\mathrm{I}, 24_\mathrm{II}$, a generator current or AC-side current $i_\mathrm{I}^s, i_\mathrm{II}^s$ from the point of view of the converters 26 is induced. The AC-side currents $i_\mathrm{I}^s, i_\mathrm{II}^s$ rotate with respect to a stationary reference frame with the rotor electrical speed $\omega_R$ (for example in rad/s). This is the derivative of the rotor electrical angle $\theta_R$ (for example in rad). The stator winding systems $24_\mathrm{I}, 24_\mathrm{II}$ have a geometrical displacement, which results in an electrical displacement angle $\beta$, which also causes a phase shift $-\beta$ between the AC-side currents $i_\mathrm{I}^s, i_\mathrm{II}^s$.

Fig. 3 shows a schematic circuit diagram of the converter 26 and/or the converter 30, which may be designed equally. Each converter 26 is connected between the DC link 28 and one of the stator winding systems 24. Each converter 30 is connected between the DC link 28 and one of the secondary winding systems 32. Each of the converters 26, 28 may be a back-to-back 3LNPC converter with three NPC half-bridges 42. The DC link 28 is a split DC link with two series-connected capacitors C.

In the case of the AC-to-DC converters 26, the components $i_a, i_b, i_c$ of the AC current i are the components $i_\mathrm{Ia}^s, i_\mathrm{Ib}^s, i_\mathrm{Ic}^s$ of the machine-side AC current $i_\mathrm{I}^s$ of the first (I) branch 18 or the components $i_\mathrm{IIa}^s, i_\mathrm{IIb}^s, i_\mathrm{IIc}^s$ of the machine-side AC current $i_{II}^s$ of the first (II) branch 18. These are the AC-side currents of the AC-to-DC converters 26.

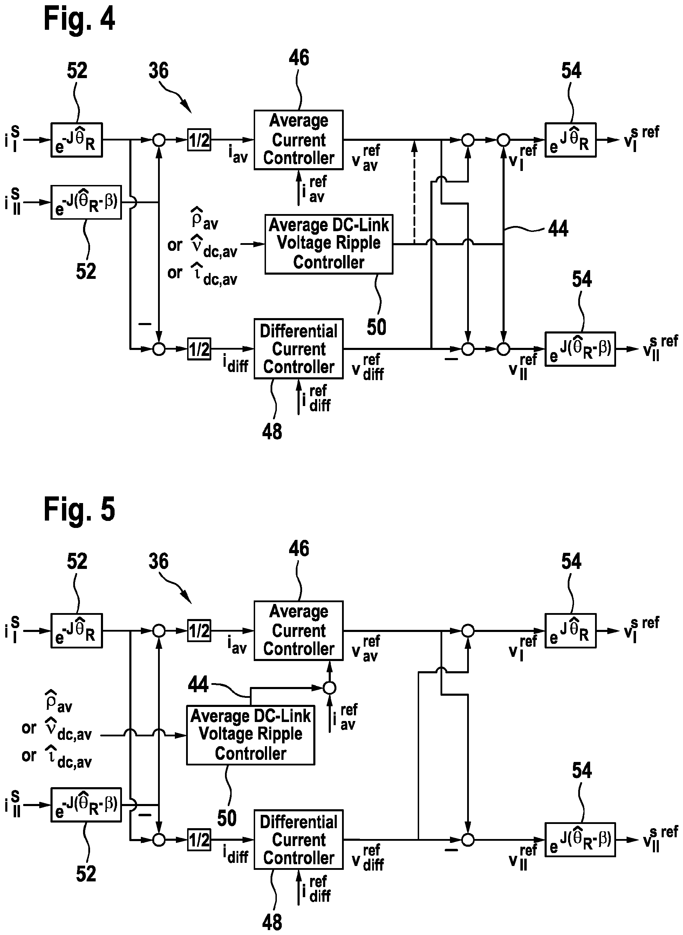

Fig. 4 and 5 show block diagrams of parts of the controller 36, which are used for controlling the AC-to-DC converters 26. The diagrams also illustrate methods for controlling the converter system 14.

At first, at least two AC-side currents $i_I^s, i_{II}^s$ (here two) are determined, each of which is input into one of the AC-to-DC converters 26. For example, the AC-side currents $i_I^s, i_{II}^s$ may be measured or otherwise estimated.

In general, the control of the currents $i_I^s, i_{II}^s$ of the generator-side converters 46 takes place in a rotating reference frame which is aligned to the rotor permanent magnet flux. In their original form, the currents $i_I^s, i_{II}^s$ are in a stationary reference frame and may have three components for each phase. In blocks 52, the AC-side currents $i_I^s, i_{II}^s$ are transformed in a rotating reference frame (such as a dq reference frame), which rotates with a fundamental frequency $\omega_R$ of the AC-side currents $i_I^s, i_{II}^s$. Furthermore, a phase-shift -$\beta$ of the AC-side current $i_{II}^s$ is eliminated.

From the AC-side currents $i_I^s, i_{II}^s$, in the rotating reference frame, an average current $i_{av}$, which is the average of AC-side currents $i_I^s, i_{II}^s$, and a differential current $i_{diff}$ is determined. In the case of more than two branches 18, a differential current $i_{diff}$ is determined for each pair of branches 18.

A decoupling of quantities of the at least two winding systems 24 and/or the at least two branches 18 is achieved by considering the average and differential quantities. For a quantity x, the corresponding average and differential quantities can be calculated as follows:

$$x_{av} = \frac{x_I + x_{II}}{2} \tag{1}$$

$$x_{diff} = \frac{x_I - x_{II}}{2}, \tag{2}$$

where the indices I and II correspond to the different winding systems 24 and/or branches 18.

The average current $i_{av}$ is the sum of all AC-side currents $i_I^s, i_{II}^s$, optionally divided by the number of branches 18. The differential current $i_{diff}$ is the difference of the AC-side currents $i_I^s, i_{II}^s$ for a pair of branches 18, optionally divided by the number of branches 18.

The average current $i_{av}$ is input into an average current controller 46, which determines an average voltage $v_{av}^{ref}$ from the average current $i_{av}$. Also an average current reference $i_{av}^{ref}$ is input into the average current controller 46 and the average voltage $v_{av}^{ref}$ is determined, such that the average current $i_{av}$ follows the average current reference $i_{av}^{ref}$. The average current reference $i_{av}^{ref}$ may be provided by a superordinated controller.

The differential current $i_{diff}$ (or each of the differential currents) is/are input into a differential current controller 46, which determines a differential voltage reference $v_{diff}^{ref}$ for each differential current $i_{diff}$. Also a differential current reference $i_{diff}^{ref}$ is input into the differential current controller 46 and the differential voltage reference $v_{diff}^{ref}$ is determined, such that the differential current $i_{diff}$ follows the differential current reference $i_{diff}^{ref}$ for the respective pair of branches 18. The differential current reference $i_{diff}^{ref}$ may be provided by the superordinated controller.

From the average voltage reference $v_{av}^{ref}$ and the one or more differential voltage references $v_{diff}^{ref}$, the voltage references $v_I^{ref}$, $v_{II}^{ref}$ for the branches 18 and in particular for the controllers 46 are determined. This can be done be the inverse transformation as defined in (1) and (2) above.

As will be explained in detail below, a converter reference correction 44 is determined by a DC link ripple controller 50. The converter reference correction 44 is determined, such that a higher order harmonic in the average DC link voltage $v_{dc,av}$ is damped.

As shown in Fig. 4, the converter reference correction 44 may be added to the average voltage reference $v_{av}^{ref}$ before the calculation of the voltage references $v_I^{ref}$, $v_{II}^{ref}$ takes place. Alternatively, the average voltage reference $v_{av}^{ref}$ is added to every voltage reference $v_I^{ref}$, $v_{II}^{ref}$ after the back transformation from the average/differential system.

As shown in Fig. 5, the converter reference correction 44 may be added to the average current reference $i_{av}^{ref}$.

In blocks 54, the voltage references $v_I^{ref}$, $v_{II}^{ref}$ are transformed back to the stationary reference frame of the respective AC-side current $i_I^s$, $i_{II}^s$ considering the phase-shift -$\beta$ of the AC-side current $i_I^s$, $i_{II}^s$. The phase-shift -$\beta$ of the AC-side currents $i_{II}^s$ is reproduced in the respective voltage reference $v_{II}^{ref}$.

In general, the converter reference correction 44 is added to the voltage references $v_I^{ref}$, $v_{II}^{ref}$ or to the average current reference $i_{av}^{ref}$, before the voltage references $v_I^{ref}$, $v_{II}^{ref}$ are transformed back to the stationary reference frame of the respective AC-side current $i_I^s$, $i_{II}^s$.

The overall result of the control are the corrected voltage references $v_I^{s\,ref}$, $v_{II}^{s\,ref}$ for the AC-to-DC converter 26, which are used to control the AC-to-DC converters 26. From the corrected voltage references $v_I^{s\,ref}$, $v_{II}^{s\,ref}$, a converter switching function $u_x \in \{-1,0,1\}$ (see Fig. 3) for each phase $x \in \{a, b, c\}$ is determined for each converter 46 and applied to the respective converter 46.

In Fig. 4 and 5, for simplicity, the symbol "+" in case of addition of two quantities is omitted. Only the symbol "-" is shown in case of subtraction. The symbol "^" is used for the estimated quantities. Because of the considered asymmetry in the d- and q-axis inductances, matrix notation is used instead of space vector notation. Note that the AC-side/stator currents of each winding are in advance transformed into two-component quantities

$$\mathbf{i}_I^s = \begin{bmatrix} i_{I,\alpha} \\ i_{I,\beta} \end{bmatrix} \qquad \mathbf{i}_{II}^s = \begin{bmatrix} i_{II,\alpha} \\ i_{II,\beta} \end{bmatrix} \qquad (3)$$

The frame transformations in the two-component system are based on

$$\mathbf{J} = \begin{bmatrix} 0 & -1 \\ 1 & 0 \end{bmatrix} \qquad e^{\mathbf{J}\hat{\theta}_R} = \begin{bmatrix} \cos\hat{\theta}_R & -\sin\hat{\theta}_R \\ \sin\hat{\theta}_R & \cos\hat{\theta}_R \end{bmatrix}. \qquad (4)$$

In the present context, the motivation for determining and adding the converter reference correction 44 is the reducing of higher order harmonics in the output voltage of the converter system 14 at the primary winding system 34. The root cause of the harmonics is that the voltages induced in the generator stator winding systems 24 by the permanent magnet flux of the rotor (typically referred to as back electromotive force, BEMF) are not sinusoidal. They include harmonics at multiples of the fundamental frequency. The most important of them appear at 3, 5 and 7 times the fundamental frequency. The 5th and 7th order BEMF harmonics cause current harmonics at the same frequency, which in turn cause a ripple of the total DC link voltage $v_{dc}$ at a frequency of $6f_G$, where $f_G$ is the fundamental frequency of the generator 16. The total DC link voltage $v_{dc}$ for one of the DC links 28 is the sum of the voltages of the two halves of the DC link 28.

The oscillating part of the total DC link voltage $v_{dc}$ can be expressed as follows:

$$v_{dc}(t) = -\frac{3}{2}\frac{1}{C}\int \mathrm{Re}\{\vec{u}_0 \sum \vec{i}_h^* + \sum \vec{u}_h \vec{i}_0^*\}dt, \qquad (5)$$

where $\vec{i}_0$ and $\vec{u}_0$ are the space vectors that correspond to the fundamental harmonics of the current and the converter switching function respectively in the rotating reference frame. The integrand is the oscillating part of the DC link current $i_{dc}$. The quantities $\vec{i}_h$ and $\vec{u}_h$ are the space vectors that correspond to the rest of the switching function and current harmonics. The real part of a space vector is equal to the d-axis component of the corresponding quantity. The imaginary part of a space vector is equal to the q-axis component of the corresponding quantity.

Considering a constant ratio of the switching function to the output voltage $\vec{v}_1/\vec{u}_1 = v_{dc}/2$, we can rewrite (5) as

$$v_{dc}(t) = -\frac{3}{2}\frac{1}{C}\frac{2}{v_{dc}}\int \mathrm{Re}\{\vec{v}_0 \sum \vec{i}_h^* + \sum \vec{v}_h \vec{i}_0^*\}dt \qquad (6)$$

The integrand in (6) is the oscillating part active power.

The generator-side induced DC link ripple harmonics appear also on the grid-side voltage and current. This happens because via the modulation process, they are multiplied with the grid-side converter switching function. For an OPP-modulated grid-side converter 30, the switching function contains all harmonics with orders that are not multiples of 2 or 3. The following harmonic transfer rules have been derived:

1. If the DC link voltage harmonic components in the branches 18 have a phase difference of 0, then sidebands around the grid-side switching function harmonics with orders $v \in$ $(12k \pm 1), k \in \mathbb{N}_0 \ (1, 11, 13, 23, 25, \ldots)$ appear on the grid-side. The sidebands around the grid-side harmonic orders $v \in (2k + 1) \cdot 6 \pm 1, k \in \mathbb{N}_0 \ (5, 7, 17, 19, \ldots)$ are cancelled out between the converters 30, if the branches 18 and the transformer windings 32 are symmetrical.

2. If the DC link voltage harmonic components in the branches 18 have a phase difference of $\pi$, then sidebands around the grid-side switching function harmonics with orders $v \in$ $(2k + 1) \cdot 6 \pm 1, k \in \mathbb{N}_0 \ (5, 7, 17, 19, \ldots)$ appear on the grid-side. The sidebands around the grid-side harmonic orders $v \in (12k \pm 1), k \in \mathbb{N}_0 \ (1, 11, 13, 23, 25, \ldots)$ are cancelled out between the converters 30, if the branches 18 and the transformer windings 32 are symmetrical.

3. If the DC link voltage harmonic components have an arbitrary phase difference, which is neither 0 nor $\pi$, then sidebands around all possible grid-side switching function orders $v \in$ $|1 \pm 6k|, k \in \mathbb{N}_0 \ (1, 5, 7, 11, 13, 17, 19, \ldots)$ appear on the grid-side.

From the above harmonic transfer rules it becomes apparent that the strongest possible harmonic components on the grid-side will appear as sidebands around the grid fundamental frequency, if the harmonic components of the DC link voltages $v_{dc}$ have zero phase difference. In other words, the ripple that appears in the sum of the DC link voltages $v_{dc}$ of the branches 18 is the most relevant quantity for the grid-side harmonics, since the product of this ripple with the fundamental component of the grid-side converter switching function generates strong grid-side voltage harmonics.

In general, a DC link ripple indicator, which is indicative of the average ripple in the DC links 28, may be used to control and reduce the average DC link ripple and in particular higher order harmonics in the ripple. For example, the sum and/or average value $v_{dc,av}$ of the measured and/or estimated DC link voltages $v_{dc}$ and/or the sum and/or average value $i_{dc,av}$ of the measured and/or estimated DC link current $i_{dc}$ and/or the sum and/or average value $p_{av}$ of the measured and/or estimated active powers in each generator winding system 24 may be used as a DC link ripple indicator.

As described, the control of the converter system 14 and in particular the AC-to-DC converters 26 may be done via an average/differential current controller 46, 48. These controllers may be standard dq frame controllers and/or resonant controllers.

Therefore, it is convenient to also use a resonant controller for the DC link ripple controller 50, in which the DC link ripple indicator, such as the average DC link voltage $v_{dc,av}$ and/or the average DC link current $i_{dc,av}$ and/or the average active power $p_{av}$, is input.

In space vector notation, a resonant controller for the estimated average power $p_{av}$ may be described by the following equation:

$$\vec{v}_{av,res} = F_{r6,av}(s)(-j\hat{p}_{av}) = k_{r6,av}\left(\frac{e^{j\varphi_{c6,av}}}{s - j6\omega_R} + \frac{e^{-j\varphi_{c6,av}}}{s + j6\omega_R}\right)\left(-jRe\{\vec{v}_{av}\vec{i}_{av}^*\}\right)$$

$$= 2k_{r6,av}\frac{s\cos(\varphi_{c6,av}) - 6\omega_R\sin(\varphi_{c6,av})}{s^2 + (6\omega_R)^2}\left(jRe\{\vec{v}_{av}\vec{i}_{av}^*\}\right), \qquad (7)$$

where $\vec{i}_{av}^*$ is the space vector of the average measured current and $\vec{v}_{av}$ is the space vector of the estimated average converter output voltage. $F_{r6,av}$ (s) is the transfer function of a SOGI (second order generalized integrator).

The estimated average active power $p_{av} = Re\{\vec{v}_{av}\vec{i}_{av}^*\}$ that appears in the above equation can be replaced by the measured and/or estimated average DC link current $i_{dc,av}$:

$$\vec{v}_{av,res} = F_{r6,av}(s)\left(-j\hat{i}_{dc,av}\right) = k_{r6,av}\left(\frac{e^{j\varphi_{c6,av}}}{s - j6\omega_R} + \frac{e^{-j\varphi_{c6,av}}}{s + j6\omega_R}\right)\left(-jRe\{\vec{\hat{u}}_{av}\vec{i}_{av}^*\}\right)$$

$$= 2k_{r6,av}\frac{s\cos(\varphi_{c6,av}) - 6\omega_R\sin(\varphi_{c6,av})}{s^2 + (6\omega_R)^2}\left(jRe\{\vec{\hat{u}}_{av}\vec{i}_{av}^*\}\right), \qquad (8)$$

In (8) the voltage space vector $\vec{v}_{av}$ has been replaced by the switching function space vector $\vec{\hat{u}}_{av}$.

The estimated average active power can be also replaced by the measured and/or estimated average DC link voltage $v_{dc,av}$:

$$\vec{v}_{av,res} = F_{r6,av}(s)\left(-jv_{dc,av}\right) = 2k_{r6,av}\frac{s\cos(\varphi_{c6,av}) - 6\omega_R\sin(\varphi_{c6,av})}{s^2 + (6\omega_R)^2}\left(-jv_{dc,av}\right) \qquad (9)$$

The average DC link voltage $v_{dc,av}$ and/or the average DC link current $i_{dc,av}$ and/or the average active power $p_{av}$ may be calculated from the respective quantities of each converter 26 as follows (see (1) above):

$$v_{dc,av} = \frac{v_{dc,I} + v_{dc,II}}{2}, \quad i_{dc,av} = \frac{i_{dc,I} + i_{dc,II}}{2}, \quad p_{av} = \frac{p_I + p_{II}}{2} \qquad (10)$$

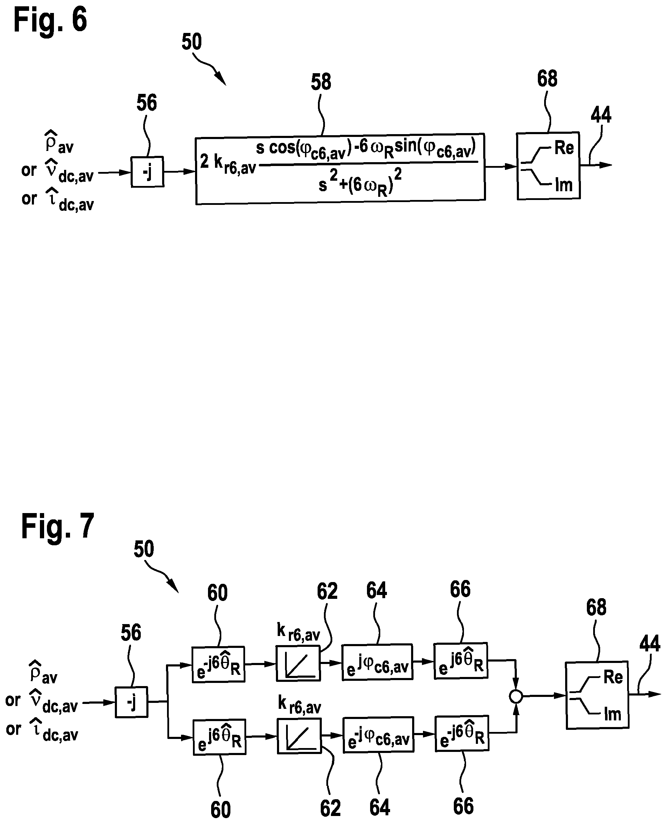

Fig. 6 and 7 show two possible implementations of a DC link ripple controller 50. Fig. 6 shows a general SOGI (Second Order Generalized Integrator), while Fig. 7 shows a specific implementation of a SOGI.

In general, the DC link ripple indicator may be input to one or more SOGIs (Second Order Generalized Integrators) with a central frequency at the higher order harmonic. For example, the central frequencies may be at $6kf_G, k \in \mathbb{N}$. For the BEMF harmonics considered above (5th and 7th), one SOGI at a frequency of $6f_G$ (6th higher order harmonic of the fundamental frequency) may suffice.

The converter reference correction 44 may be determined from the DC link ripple indicator $v_{dc,av}$, $i_{dc,av}$, $p_{av}$ with a second order generalized integrator with a central frequency at the higher order harmonic. The higher order harmonic may be the 6th order harmonic.

In both implementations in block 56, the DC link ripple indicator $v_{dc,av}$, $i_{dc,av}$, $p_{av}$ is provided as complex value. It has to be noted that the converter reference correction 44 may be provided with respect to a rotating reference frame rotating with a fundamental frequency of the AC-side currents $i_I^s$, $i_{II}^s$. In a first step the DC link ripple indicator $v_{dc,av}$, $p_{av}$ is rotated by 90° by multiplication with -j, the imaginary unit. This rotation can be incorporated in the compensation angle $\varphi_{c6,av}$.

In the implementation of Fig. 6, in block 58, the SOGI is applied directly, such as described with respect to formulas (7)-(9) above. $k_{r,av}$ is the gain of SOGI and $\varphi_{c6,av}$ is the compensation angle of the SOGI. Instead of $6\omega_R$, other multiples k of kth higher harmonic can be multiplied with the rotor electrical speed $\omega_R$.

In the implementation of Fig. 7, in blocks 60, the DC link ripple indicator $v_{dc,av}$, $i_{dc,av}$, $p_{av}$ is transformed into a rotating reference frame rotating with the frequency of the higher order harmonic, here with $6\hat{\theta}_R$ or more general $k\hat{\theta}_R$, where $\hat{\theta}_R$ is the estimated rotor angle. The rotation is performed with positive and negative angle, so that both sine and cosine terms are covered.

In blocks 62, a gain factor $k_{r6,av}$ is multiplied with the transformed DC link ripple indicator $v_{dc,av}$, $i_{dc,av}$, $p_{av}$ and in blocks 64, a compensation angle $\varphi_{c6,av}$ is added to the phase of the transformed DC link ripple indicator 44 and the converter reference correction 44 is formed in this way. The compensation angle $\varphi_{c6,av}$ may be 0, if the DC link ripple indicator is the average DC link voltage $v_{dc,av}$, and may be $\pi/2$, if the DC link ripple indicator is the average active power $p_{av}$ or the average DC link current $i_{dc,av}$. This may mean that the output of the DC link ripple controller 50 has only an imaginary part in the former and only a real part in the two latter cases.

In blocks 66, the converter reference correction 44 is transformed back in the rotating reference frame rotating with a fundamental frequency of the AC-side current $i_I^s$, $i_{II}^s$ by applying the inverse transformation of blocks 60.

In both implementations, in block 68, the complex-valued converter reference correction 44 is split up into real part and imaginary part to form a two-component vector, which can be added to the respective reference $i_{av}^{ref}$, $v_{av}^{ref}$. Together with this reference, the converter reference correction 44 is transformed in the end into a stationary reference frame of the respective AC-side current $i_I^s$, $i_{II}^s$ considering the phase-shift $-\beta$ of the AC-side current $i_I^s$, $i_{II}^s$ (see Fig. 4 and 5).

## Claims

1. A method for controlling a converter system (14),

   the converter system (14) comprising at least two branches (18), wherein each branch (18) comprises an AC-to-DC converter (26) and a DC link (28) cascade connected with each other;
   the method **characterized by**:

   determining at least two AC-side currents $(i_I^s, i_{II}^s)$, each of which is input into one of the AC-to-DC converters (26);

   determining from the AC-side currents $(i_I^s, i_{II}^s)$, a voltage reference $(v_{av}^{ref}, v_{diff}^{ref})$ for each of the AC-to-DC converters (26), such that the AC-side current $(i_I^s, i_{II}^s)$ follows a current reference $(i_{av}^{ref}, i_{diff}^{ref})$ for the respective AC-to-DC converter (26);
   determining a DC link ripple indicator ($v_{dc,av}$, $i_{dc,av}$, $p_{av}$), which DC link ripple indicator ($v_{dc,av}$, $p_{av}$) is an average DC link voltage ($v_{dc,av}$) of the DC links (28), an average DC link current ($i_{dc,av}$) of the DC links (28) and/or an average active power ($p_{av}$) input into the at least two branches (18);
   determining a converter reference correction (44) from the DC link ripple indicator ($v_{dc,av}$, $i_{dc,av}$, $p_{av}$), such that a higher order harmonic in the average DC link voltage ($v_{dc,av}$) is damped;

   determining corrected voltage references $(v_I^{s\,ref}, v_{II}^{s\,ref})$ for the AC-to-DC converter (26) by adding the converter reference correction (44) to the voltage references of the AC-to-DC converters (26) or by adding the converter reference correction (45) to an average current reference for the AC-to-DC converters (26);

   controlling the AC-to-DC converters (26) with the respective corrected voltage references $(v_I^{s\,ref}, v_{II}^{s\,ref})$.

2. The method of claim 1,

   wherein the converter reference correction (44) is determined with respect to a rotating reference frame rotating with a fundamental frequency of the AC-side currents ( $i_I^s$, $i_{II}^s$ );
   wherein the converter reference correction (44) is transformed into a stationary reference frame of the respective AC-side current $(i_I^s, i_{II}^s)$ considering the phase-shift ($-\beta$) of the AC-side current $(i_I^s, i_{II}^s)$.

3. The method of claim 1 or 2,
   wherein the converter reference correction (44) is determined from the DC link ripple indicator ($v_{dc,av}$, $i_{dc,av}$, $p_{av}$) with a

second order generalized integrator with a central frequency at the higher order harmonic.

4. The method of one of the previous claims,

wherein the DC link ripple indicator ($v_{dc,av}$, $i_{dc,av}$, $p_{av}$) is transformed into a rotating reference frame rotating with the frequency of the higher order harmonic;
wherein the converter reference correction (44) is determined from the DC link ripple indicator ($v_{dc,av}$, $i_{dc,av}$, $p_{av}$) by multiplying a gain factor ($k_{r,av}$) to the DC link ripple indicator ($v_{dc,av}$, $i_{dc,av}$, $p_{av}$), integrating it and/or adding a compensation angle ($\varphi_{c6,av}$) to a phase of the DC link ripple indicator and/or to a phase of the output of the integrator (44);
wherein the converter reference correction (44) is transformed back in a rotating reference frame rotating with a fundamental frequency of the AC-side current $(i_I^s, i_{II}^s)$.

5. The method of one of the previous claims,
wherein the higher order harmonic is the 6$^{th}$ higher order harmonic.

6. The method of one of the previous claims, further comprising:

determining an average current ($i_{av}$), which is the average of AC-side currents ($i_I^s$, $i_{II}^s$), and a differential current ($i_{diff}$) for each pair of branches (18), which differential current ($i_{diff}$) is the difference of the AC-side currents $(i_I^s, i_{II}^s)$ for a pair of branches (18);

determining an average voltage $(v_{av}^{ref})$ from the average current ($i_{av}$) with an average current controller (46), such that the average current follows ($i_{av}$) an average current reference $(i_{av}^{ref})$;

determining a differential voltage reference $(v_{diff}^{ref})$ for each differential current ($i_{diff}$) with a differential current controller (48), such that the differential current ($i_{diff}$) follows a differential current reference $(i_{diff}^{ref})$ for the respective pair of branches (18);

determining the voltage reference $(v_I^{ref}, v_{II}^{ref})$ for each branch (18) from the average voltage reference $(v_{av}^{ref})$ and the differential voltage references $(v_{diff}^{ref})$.

7. The method of claim 6,
wherein the converter reference correction (44) is added to the average voltage reference ($v_{av}^r e_v^f$).

8. The method of claim 6,
wherein the converter reference correction (44) is added to the average current reference $(i_{av}^{ref})$.

9. The method of one of the previous claims,

wherein the AC-side currents $(i_I^s, i_{II}^s)$ are transformed in a rotating reference frame, which rotates with a fundamental frequency of the AC-side current $(i_I^s, i_{II}^s)$ and which eliminates a phase-shift of the AC-side current $(i_I^s, i_{II}^s)$, before the voltage references are determined;

wherein the voltage references $(v_I^{ref}, v_{II}^{ref})$ are transformed back to a stationary reference frame of the respective AC-side current $(i_I^s, i_{II}^s)$ considering the phase-shift of the AC-side current $(i_I^s, i_{II}^s)$.

10. The method of one of the previous claims,

wherein the converter reference correction (44) is added to the voltage references ( $v_I^{ref}$, $v_{II}^{ref}$ ), before the voltage references are transformed back to a stationary reference frame of the respective AC-side current $(i_I^s, i_{II}^s)$ considering the phase-shift of the AC-side current $(i_I^s, i_{II}^s)$.

11. A computer program, which, when being executed on at least one processor of a converter system (14), is adapted for performing the method of one of the previous claims.

12. A computer-readable medium on which a computer program according to claim 11 is stored.

13. A controller (36) for a converter system (14), **characterized in that** it is adapted for performing the method of one of claims 1 to 10,
wherein the controller (36) comprises:

a DC link ripple controller (50) for determining the converter reference correction (44);

at least two current controllers (46, 48) for determining the voltage references ( $v_{av}^{ref}$, $v_{diff}^{ref}$ ).

14. A converter system (14), comprising:

at least two branches (18), each branch (18) comprising an AC-to-DC converter (26) and a DC link (28) cascade connected with each other;
a controller (36) according to claim 13.

15. The converter system (14) of claim 14, further comprising:

a rotating electrical machine (16);
wherein the rotating electrical machine (16) comprises at least two stator winding systems (24, 24a, 24b), each of which is connected to one of the AC-to-DC converters (26).

16. The converter system (14) of claim 15,

wherein the rotating electrical machine (16) is a generator and/or a motor;
wherein the rotating electrical machine (16) is a permanent magnet synchronous machine.

17. The converter system (14) of one of claims 14 to 16, further comprising:

a transformer (20) with at least two secondary winding systems (32), each secondary winding system (32) connected to a DC-to-AC converter (30), which is cascade connected with a DC link (28) of the branches (18);
wherein the transformer (20) comprises a primary winding system (34) connected to an electrical grid (22).


**Patentansprüche**

1. Verfahren zum Steuern eines Umrichtersystems (14),

wobei das Umrichtersystem (14) wenigstens zwei Zweige (18) umfasst, wobei jeder Zweig (18) einen AC-DC-Umrichter (26) und einen Gleichspannungszwischenkreis (28) umfasst, die kaskadenartig miteinander verbunden sind;
wobei das Verfahren **gekennzeichnet ist durch**:

Bestimmen von wenigstens zwei AC-seitigen Strömen $(i_I^s, i_{II}^s)$, die jeweils in einen der AC-DC-Umrichter (26) eingegeben werden;

Bestimmen, aus den AC-seitigen Strömen $(i_I^s, i_{II}^s)$, einer Spannungsreferenz $\left(v_{av}^{ref}, v_{diff}^{ref}\right)$ für jeden der AC-DC-Umrichter (26), so dass der AC-seitige Strom $\left(i_I^s,\ i_{II}^s\right)$ einer Stromreferenz $\left(i_{av}^{ref},\ i_{diff}^{ref}\right)$ für den jeweiligen AC-DC-Umrichter (26) folgt;

Bestimmen eines Gleichspannungszwischenkreiswelligkeitsindikators ($v_{dc,av}$, $i_{dc,av}$, $p_{av}$), wobei der Gleichspannungszwischenkreiswelligkeitsindikator ($v_{dc,av}$, $p_{av}$) eine Durchschnittgleichspannungszwischenkreisspannung ($v_{dc,av}$) des Gleichspannungszwischenkreises (28), ein Durchschnittgleichspannungszwischenkreisstrom ($i_{dc,av}$) des Gleichspannungszwischenkreises (28) und/oder eine durchschnittliche aktive Leistung ($p_{av}$), die in die wenigstens zwei Zeige (18) eingegeben wird, ist;

Bestimmen einer Umrichterreferenzkorrektur (44) aus dem Gleichspannungszwischenkreiswelligkeitsindikator ($v_{dc,av}$, $i_{dc,av}$, $p_{av}$), so dass eine Harmonische höherer Ordnung in der Durchschnittgleichspannungszwischenkreisspannung ($v_{dc,av}$) gedämpft wird;

Bestimmen korrigierter Spannungsreferenzen $\left(v_I^{s\,ref},\ v_{II}^{s\,ref}\right)$ für den AC-DC-Umrichter (26) **durch** Addieren der Umrichterreferenzkorrektur (44) zu den Spannungsreferenzen der AC-DC-Umrichter (26) oder **durch** Addieren der Umrichterreferenzkorrektur (45) zu einer Durchschnittstromreferenz für die AC-DC-Umrichter (26);

Steuern der AC-DC-Umrichter (26) mit den jeweiligen korrigierten Spannungsreferenzen $\left(v_I^{s\,ref},\ v_{II}^{s\,ref}\right)$.

2. Verfahren nach Anspruch 1,

   wobei die Umrichterreferenzkorrektur (44) mit Bezug auf einen Rotationsreferenzrahmen bestimmt wird, der mit einer Fundamentalfrequenz der AC-seitigen Ströme $\left(i_I^s,\ i_{II}^s\right)$ rotiert;

   wobei die Umrichterreferenzkorrektur (44) in einen stationären Referenzrahmen des jeweiligen AC-seitigen Stroms $\left(i_I^s,\ i_{II}^s\right)$ unter Berücksichtigung der Phasenverschiebung (-β) des AC-seitigen Stroms $\left(i_I^s,\ i_{II}^s\right)$ transformiert wird.

3. Verfahren nach Anspruch 1 oder 2,
   wobei die Umrichterreferenzkorrektur (44) aus dem Gleichspannungszwischenkreiswelligkeitsindikator ($v_{dc,av}$, $i_{dc,av}$, $p_{av}$) mit einem verallgemeinerten Integrator zweiter Ordnung mit einer Mittenfrequenz bei der Harmonischen höherer Ordnung bestimmt wird.

4. Verfahren nach einem der vorhergehenden Ansprüche,

   wobei der Gleichspannungszwischenkreiswelligkeitsindikator ($v_{dc,av}$, $i_{dc,av}$, $p_{av}$) in einen Rotationsreferenzrahmen transformiert wird, der mit der Frequenz der Harmonischen höherer Ordnung rotiert;

   wobei die Umrichterreferenzkorrektur (44) aus dem Gleichspannungszwischenkreiswelligkeitsindikator ($v_{dc,av}$, $i_{dc,av}$, $p_{av}$) durch Multiplizieren eines Verstärkungsfaktors ($k_{r,av}$) mit dem Gleichspannungszwischenkreiswelligkeitsindikator ($v_{dc,av}$, $i_{dc,av}$, $p_{av}$), Integrieren von diesem und/oder Addieren eines Kompensationswinkels ($\varphi_{c6,av}$) zu einer Phase des Gleichspannungszwischenkreiswelligkeitsindikators und/oder zu einer Phase der Ausgabe des Integrators (44) bestimmt wird;

   wobei die Umrichterreferenzkorrektur (44) zurück in einen Rotationsreferenzrahmen transformiert wird, der mit einer Fundamentalfrequenz des AC-seitigen Stroms $\left(i_I^s,\ i_{II}^s\right)$ rotiert.

5. Verfahren nach einem der vorhergehenden Ansprüche, wobei die Harmonische höherer Ordnung die höhere Harmonische 6. Ordnung ist.

6. Verfahren nach einem der vorhergehenden Ansprüche, das ferner Folgendes umfasst:

   Bestimmen eines Durchschnittstroms ($i_{av}$), der der Durchschnitt der AC-seitigen Ströme $\left(i_I^s,\ i_{II}^s\right)$ ist, und eines Differenzstroms ($i_{diff}$) für jedes Paar von Zweigen (18), wobei ein Differenzstrom ($i_{diff}$) die Differenz der AC-seitigen Ströme $\left(i_I^s,\ i_{II}^s\right)$ für ein Paar von Zweigen (18) ist;

Bestimmen einer Durchschnittspannung $\left(v_{av}^{ref}\right)$ aus dem Durchschnittstrom ($i_{av}$) mit einer Durchschnittsstromsteuerung (46), so dass der Durchschnittstrom ($i_{av}$) einer Durchschnittstromreferenz $\left(i_{av}^{ref}\right)$ folgt;

Bestimmen einer Differenzspannungsreferenz $\left(v_{diff}^{ref}\right)$ für jeden Differenzstrom ($i_{diff}$) mit einer Differenzstromsteuerung (48), so dass der Differenzstrom ($i_{diff}$) einer Differenzstromreferenz $\left(i_{diff}^{ref}\right)$ für das jeweilige Paar von Zweigen (18) folgt;

Bestimmen der Spannungsreferenz $\left(v_I^{ref},\ v_{II}^{ref}\right)$ für jeden Zweig (18) aus der Durchschnittspannungsreferenz $\left(v_{av}^{ref}\right)$ und den Differenzspannungsreferenzen $\left(v_{diff}^{ref}\right)$.

7. Verfahren nach Anspruch 6,

wobei die Umrichterreferenzkorrektur (44) zu der Durchschnittsspannungsreferenz $\left(v_{av}^{ref}\right)$ addiert wird.

8. Verfahren nach Anspruch 6,

wobei die Umrichterreferenzkorrektur (44) zu der Durchschnittsstromreferenz $\left(i_{av}^{ref}\right)$ addiert wird.

9. Verfahren nach einem der vorhergehenden Ansprüche,

wobei die AC-seitigen Ströme $\left(i_I^s,\ i_{II}^s\right)$ in einen Rotationsreferenzrahmen transformiert werden, der mit einer Fundamentalfrequenz des AC-seitigen Stroms $\left(i_I^s,\ i_{II}^s\right)$ rotiert und der eine Phasenverschiebung des AC-seitigen Stroms $\left(i_I^s,\ i_{II}^s\right)$ beseitigt, bevor die Spannungsreferenzen bestimmt werden;

wobei die Spannungsreferenzen $\left(v_I^{ref},\ v_{II}^{ref}\right)$ zurück in einen stationären Referenzrahmen des jeweiligen AC-seitigen Stroms $\left(i_I^s,\ i_{II}^s\right)$ unter Berücksichtigung der Phasenverschiebung des AC-seitigen Stroms $\left(i_I^s,\ i_{II}^s\right)$ transformiert werden.

10. Verfahren nach einem der vorhergehenden Ansprüche,

wobei die Umrichterreferenzkorrektur (44) zu den Spannungsreferenzen $\left(v_I^{ref},\ v_{II}^{ref}\right)$ addiert wird, bevor die Spannungsreferenzen zurück in einen stationären Referenzrahmen des jeweiligen AC-seitigen Stroms $\left(i_I^s,\ i_{II}^s\right)$ unter Berücksichtigung der Phasenverschiebung des AC-seitigen Stroms $\left(i_I^s,\ i_{II}^s\right)$ transformiert werden.

11. Computerprogramm, das bei Ausführung auf wenigstens einem Prozessor eines Umrichtersystems (14) zum Durchführen des Verfahrens nach einem der vorhergehenden Ansprüche eingerichtet ist.

12. Computerlesbares Medium, auf dem ein Computerprogramm nach Anspruch 11 gespeichert ist.

13. Steuerung (36) für ein Umrichtersystem (14), **dadurch gekennzeichnet, dass** sie zum Durchführen des Verfahrens nach einem der Ansprüche 1 bis 10 eingerichtet ist,
wobei die Steuerung (36) Folgendes umfasst:

eine Gleichspannungszwischenkreiswelligkeitssteuerung (50) zum Bestimmen der Umrichterreferenzkorrektur (44);

wenigstens zwei Stromsteuerungen (46, 48) zum Bestimmen der Spannungsreferenzen $\left(v_{av}^{ref},\ v_{diff}^{ref}\right)$.

**14.** Umrichtersystem (14), das Folgendes umfasst:

wenigstens zwei Zweige (18), wobei jeder Zweig (18) einen AC-DC-Umrichter (26) und einen Gleichspannungszwischenkreis (28) umfasst, die kaskadenartig miteinander verbunden sind;
eine Steuerung (36) nach Anspruch 13.

**15.** Umrichtersystem (14) nach Anspruch 14, das ferner Folgendes umfasst:

eine rotierende elektrische Maschine (16);
wobei die rotierende elektrische Maschine (16) wenigstens zwei Statorwicklungssysteme (24, 24a, 24b) umfasst, die jeweils mit einem der AC-DC-Umrichter (26) verbunden sind.

**16.** Umrichtersystem (14) nach Anspruch 15,

wobei die rotierende elektrische Maschine (16) ein Generator und/oder ein Motor ist;
wobei die rotierende elektrische Maschine (16) eine Permanentmagnetsynchronmaschine ist.

**17.** Umrichtersystem (14) nach einem der Ansprüche 14 bis 16, das ferner Folgendes umfasst:

einen Transformator (20) mit wenigstens zwei Sekundärwicklungssystemen (32), wobei jedes Sekundärwicklungssystem (32) mit einem DC-AC-Umrichter (30) verbunden ist, der kaskadenartig mit einem Gleichspannungszwischenkreis (28) der Zweige (18) verbunden ist;
wobei der Transformator (20) ein Primärwicklungssystem (34) umfasst, das mit einem Stromnetz (22) verbunden ist.

**Revendications**

**1.** Procédé de commande d'un système convertisseur (14),

le système convertisseur (14) comprenant au moins deux branches (18), chaque branche (18) comprenant un convertisseur alternatif-continu (26) et une liaison à courant continu (28) reliés entre eux en cascade ;
le procédé étant **caractérisé par** :

la détermination d'au moins deux courants côté alternatif $\left(i_I^s, \ i_{II}^s\right)$, chacun desquels est injecté dans l'un des convertisseurs alternatif-continu (26) ;

la détermination, à partir des courants côté alternatif $\left(i_I^s, \ i_{II}^s\right)$, d'une tension de référence $\left(v_{av}^{ref}, \ v_{diff}^{ref}\right)$ pour chacun des convertisseurs alternatif-continu (26), de sorte que le courant côté alternatif $\left(i_I^s, \ i_{II}^s\right)$ suive une référence de courant $\left(i_{av}^{ref}, \ i_{diff}^{ref}\right)$ pour le convertisseur alternatif-continu (26) respectif ;
la détermination d'un indicateur d'ondulation de liaison à courant continu ($v_{dc,av}$, $i_{dc,av}$, $p_{av}$), lequel indicateur d'ondulation de liaison à courant continu ($v_{dc,av}$, $p_{av}$) est une tension moyenne de liaison à courant continu ($v_{dc,av}$) des liaisons à courant continu (28), un courant moyen de liaison à courant continu ($i_{dc,av}$) des liaisons à courant continu (28) et/ou une puissance active moyenne ($p_{av}$) injectée dans les au moins deux branches (18) ;
la détermination d'une correction de références de convertisseur (44) à partir de l'indicateur d'ondulation de liaison à courant continu ($v_{dc,av}$, $i_{dc,av}$, $p_{av}$), de sorte à amortir un harmonique d'ordre supérieur dans la tension moyenne de liaison à courant continu ($v_{dc,av}$) ;

la détermination de références de tension corrigées $\left(v_I^{s\ ref}, \ v_{II}^{s\ ref}\right)$ pour le convertisseur alternatif-continu (26) par ajout de la correction de références de convertisseur (44) aux références de tension des convertisseurs alternatif-continu (26) ou par ajout de la correction de références de convertisseur (45) à une référence de courant moyen pour les convertisseurs alternatif-continu (26) ;
la commande des convertisseurs alternatif-continu (26) au moyen des références de tension corrigées

$$\left(v_I^{s\,ref},\ v_{II}^{s\,ref}\right)$$ respectives.

2. Procédé selon la revendication **1,**

la correction de références de convertisseur (44) étant déterminée par rapport à un repère tournant qui tourne à une fréquence fondamentale des courants côté alternatif $\left(i_I^s,\ i_{II}^s\right)$ ;

la correction de références de convertisseur (44) étant transformée dans un repère fixe du courant côté alternatif $\left(i_I^s,\ i_{II}^s\right)$ respectif compte tenu du déphasage (-β) du courant côté alternatif $\left(i_I^s,\ i_{II}^s\right)$.

3. Procédé selon la revendication 1 ou 2,

la correction de références de convertisseur (44) étant déterminée à partir de l'indicateur d'ondulation de liaison à courant continu ($v_{dc,av}$, $i_{dc,av}$, $p_{av}$) au moyen d'un intégrateur de second ordre généralisé dont la fréquence centrale se situe au niveau de l'harmonique d'ordre supérieur.

4. Procédé selon l'une des revendications précédentes, l'indicateur d'ondulation de liaison à courant continu ($v_{dc,av}$, $i_{dc,av}$, $p_{av}$) étant transformé dans un repère tournant qui tourne à la fréquence de l'harmonique d'ordre supérieur ;

la correction de références de convertisseur (44) étant déterminée à partir de l'indicateur d'ondulation de liaison à courant continu ($v_{dc,av}$, $i_{dc,av}$, $p_{av}$) par multiplication de l'indicateur d'ondulation de liaison à courant continu ($v_{dc,av}$, $i_{dc,av}$, $p_{av}$) par un facteur de gain ($k_{r,av}$), par son intégration et/ou par ajout d'un angle de compensation ($\varphi_{c6,av}$) à une phase de l'indicateur d'ondulation de liaison à courant continu et/ou à une phase de la sortie de l'intégrateur (44) ;

la correction de références de convertisseur (44) étant retransformée dans un repère tournant qui tourne à une fréquence fondamentale du courant côté alternatif $\left(i_I^s,\ i_{II}^s\right)$.

5. Procédé selon l'une des revendications précédentes, l'harmonique d'ordre supérieur étant l'harmonique supérieur d'ordre 6.

6. Procédé selon l'une des revendications précédentes, comportant en outre :

la détermination d'un courant moyen ($i_{av}$), qui représente la moyenne des courants côté alternatif $\left(i_I^s,\ i_{II}^s\right)$, et d'un courant différentiel ($i_{diff}$) pour chaque paire de branches (18), lequel courant différentiel ($i_{diff}$) représentant la différence des courants côté alternatif $\left(i_I^s,\ i_{II}^s\right)$ pour une paire de branches (18) ;

la détermination d'une tension moyenne $\left(v_{av}^{ref}\right)$ à partir du courant moyen ($i_{av}$) au moyen d'un contrôleur de courant moyen (46), de sorte que le courant moyen ($i_{av}$) suive une référence de courant moyen $\left(i_{av}^{ref}\right)$ ;

la détermination d'une référence de tension différentielle $\left(v_{diff}^{ref}\right)$ pour chaque courant différentiel ($i_{diff}$) au moyen d'un contrôleur de courant différentiel (48), de sorte que le courant différentiel ($i_{diff}$) suive une référence de courant différentiel $\left(i_{diff}^{ref}\right)$ pour la paire respective de branches (18) ;

la détermination de la référence de tension $\left(v_I^{ref},\ v_{II}^{ref}\right)$ pour chaque branche (18) à partir de la référence de tension moyenne $\left(v_{av}^{ref}\right)$ et des références de tension différentielle $\left(v_{diff}^{ref}\right)$.

7. Procédé selon la revendication 6,

la correction de références de convertisseur (44) étant ajoutée à la référence de tension moyenne $\left(v_{av}^{ref}\right)$.

8. Procédé selon la revendication 6,

la correction de références de convertisseur (44) étant ajoutée à la référence de courant moyen $\left(i_{av}^{ref}\right)$.

9. Procédé selon l'une des revendications précédentes,

les courants côté alternatif $\left(i_I^s,\ i_{II}^s\right)$ étant transformés dans un repère tournant qui tourne à une fréquence fondamentale du courant côté alternatif $\left(i_I^s,\ i_{II}^s\right)$ et qui supprime un déphasage du courant côté alternatif $\left(i_I^s,\ i_{II}^s\right)$ préalablement à la détermination des références de tension ;

les références de tensions $\left(v_I^{ref},\ v_{II}^{ref}\right)$ étant retransformées dans un repère fixe du courant côté alternatif $\left(i_I^s,\ i_{II}^s\right)$ respectif compte tenu du déphasage du courant côté alternatif $\left(i_I^s,\ i_{II}^s\right)$.

10. Procédé selon l'une des revendications précédentes, la correction de références de convertisseur (44) étant ajoutée aux références de tension $\left(v_I^{ref},\ v_{II}^{ref}\right)$ préalablement à la retransformation des références de tension dans un repère fixe du courant côté alternatif $\left(i_I^s,\ i_{II}^s\right)$ respectif compte tenu du déphasage du courant côté alternatif ( $i_I^s$, $i_{II}^s$ ).

11. Programme informatique qui, lorsqu'il s'exécute sur au moins un processeur d'un système convertisseur (14), est adapté à réaliser le procédé selon l'une des revendications précédentes.

12. Support lisible par ordinateur, sur lequel est stocké un programme informatique selon la revendication 11.

13. Contrôleur (36) pour un système convertisseur (14), **caractérisé en ce qu'**il est adapté à réaliser le procédé selon l'une des revendications 1 à 10,
le contrôleur (36) comprenant :

un contrôleur d'ondulation de liaison à courant continu (50) pour déterminer la correction de références de convertisseur (44) ;

au moins deux contrôleurs de courant (46, 48) pour déterminer la références de tension $\left(v_{av}^{ref},\ v_{diff}^{ref}\right)$.

14. Système convertisseur (14), comprenant :

au moins deux branches (18), chaque branche (18) comprenant un convertisseur alternatif-continu (26) et une liaison à courant continu (28) reliés entre eux en cascade ;
un contrôleur (36) selon la revendication 13.

15. Système convertisseur (14) selon la revendication 14, comprenant en outre :

une machine électrique tournante (16) ;
la machine électrique tournante (16) comprenant au moins deux systèmes d'enroulement statorique (24, 24a, 24b), chacun desquels est relié à l'un des convertisseurs alternatif-continu (26).

16. Système convertisseur (14) selon la revendication 15,

la machine électrique tournante (16) étant un générateur et/ou un moteur ;
la machine électrique tournante (16) étant une machine synchrone à aimants permanents.

17. Système convertisseur (14) selon l'une des revendications 14 à 16, comprenant en outre :

un transformateur (20) pourvu d'au moins deux systèmes d'enroulement secondaire (32), chaque système d'enroulement secondaire (32) étant relié à un convertisseur continu-alternatif (30), lequel est relié en cascade à une liaison à courant continu (28) des branches (18) ;
le transformateur (20) comprenant un système d'enroulement primaire (34) relié à un réseau électrique (22) .

## Fig. 1

10   14   18   26   28   30   32   20

12   16   24

$i^S_{I\,a}$   $i^S_{I\,b}$   $i^S_{I\,c}$

3LNPC

$v_{Idc}$   C   C

3LNPC

$i_{Ia}$   $i_{Ib}$   $i_{Ic}$

$v_{Ia}$   $v_{Ib}$   $v_{Ic}$   $1:\eta_T$

34   22

$v_{gTa}$   $L_g$   $v_{ga}$

$v_{gTb}$   $i_{ga}$   $L_g$   $v_{gb}$

$v_{gTc}$   $i_{gb}$   $L_g$   $v_{gc}$

$i_{gc}$

36

$i^S_{II\,a}$   $i^S_{II\,b}$   $i^S_{II\,c}$

3LNPC

$v_{IIdc}$   C   C

3LNPC

$i_{IIa}$   $i_{IIb}$   $i_{IIc}$

$i_{IIac}$   $v_{IIac}$

$i_{IIba}$   $v_{IIba}$

$i_{IIcb}$   $v_{IIcb}$   $\sqrt{3}:\eta_T$

24   26   28   30   32

18

**Fig. 2**

**Fig. 3**

# Fig. 4

# Fig. 5

# Fig. 6

50

56

58

68

44

$\hat{\rho}_{av}$

or $\hat{v}_{dc,av}$

or $\hat{\imath}_{dc,av}$

$-j$

$2\,k_{r6,av}\dfrac{s\cos(\varphi_{c6,av})-6\,\omega_R\sin(\varphi_{c6,av})}{s^2+(6\omega_R)^2}$

Re

Im

# Fig. 7

50

60

62

64

66

68

56

44

$\hat{\rho}_{av}$

or $\hat{v}_{dc,av}$

or $\hat{\imath}_{dc,av}$

$-j$

$e^{-j6\hat{\theta}_R}$

$k_{r6,av}$

$e^{j\varphi_{c6,av}}$

$e^{j6\hat{\theta}_R}$

$e^{j6\hat{\theta}_R}$

$k_{r6,av}$

$e^{-j\varphi_{c6,av}}$

$e^{-j6\hat{\theta}_R}$

Re

Im

60

62

64

66

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2698894 A2